# EUROPEAN PATENT APPLICATION

(11) **EP 4 552 948 A1**
(43) Date of publication of application: **14.05.2025**
(21) Application number: 22952534.0
(22) Date of filing: 29.07.2022
(51) Int. Cl.: B62D 5/04, B62D 5/00, B62D 1/20, B62D 15/02, B62D 3/02

(54) **STEERING WHEEL LIMITING DEVICE, STEERING WHEEL, AND VEHICLE**

(71) Applicant: Shenzhen Yinwang Intelligent Technologies Co., Ltd., Shenzhen, Guangdong 518129 (CN)
(72) Inventor: ZHANG, Zhiyang, Shenzhen, Guangdong 518129 (CN); WANG, Hui, Shenzhen, Guangdong 518129 (CN); ZHU, Bing, Shenzhen, Guangdong 518129 (CN)
(74) Representative: Pfenning, Meinig & Partner mbB
(86) International application number: PCT/CN2022/109164
(87) International publication number: WO 2024/021087

(57) **Abstract**

A steer-by-wire steering wheel limiting apparatus, and a steering wheel and a vehicle that include the steering wheel limiting apparatus are disclosed. The steering wheel limiting apparatus includes a first transmission member (1), a second transmission member (2), and a limiting member (3). The first transmission member is configured to connect to a steering wheel, and the second transmission member is in a transmission connection to the first transmission member. The steering wheel controls the first transmission member to drive the second transmission member to move. A positioning portion (21) is disposed on the second transmission member. The limiting member is movably disposed on one side of the second transmission member, and the limiting member blocks the positioning portion, to limit a clockwise rotation angle and a counter-clockwise rotation angle of the first transmission member. The steer-by-wire steering wheel limiting apparatus enables a user to adjust a maximum rotation angle range of the steering wheel, so that the steer-by-wire steering wheel limiting apparatus can be used in different types of vehicles. This reduces manufacturing costs.

## Description

### TECHNICAL FIELD

This application relates to the field of vehicle technologies, and in particular, to a steering wheel limiting apparatus, a steering wheel, and a vehicle.

### BACKGROUND

Steer-by-wire systems are derived from demands of intelligent driving vehicles for wire-controlled intelligent chassis. Because steering wheels in the steer-by-wire systems do not have mechanical parts directly connected to steering mechanisms, rotation angles of the steering wheels need to be limited through limiting apparatuses, so that the steering wheels can be prevented from exceeding rotation angle ranges. For different vehicle models, limiting angles of commercial vehicles are different from those of passenger vehicles. Rotation angle ranges of steering wheels of the commercial vehicles are usually larger, and rotation angle ranges of the passenger vehicles are smaller. Limiting apparatuses in the steer-by-wire systems are not adjustable after delivery, and maximum angles of the steering wheels are fixed accordingly, and are not universal. Different steer-by-wire systems need to be manufactured for different vehicle models, and manufacturing costs are relatively high.

### SUMMARY

This application provides a steering wheel limiting apparatus, a steering wheel, and a vehicle, so that a user can adjust a maximum rotation angle range of a steering wheel. In this way, the steering wheel limiting apparatus can be used in different types of vehicles. This reduces manufacturing costs.

A first aspect of this application provides a steering wheel limiting apparatus, where the steering wheel limiting apparatus includes a first transmission member, a second transmission member, and a limiting member. The first transmission member is configured to connect to a steering wheel, and the second transmission member is in a transmission connection to the first transmission member. The steering wheel controls the first transmission member to drive the second transmission member to move. A positioning portion is disposed on the second transmission member. The limiting member is movably disposed on one side of the second transmission member, and the limiting member blocks the positioning portion, to limit a rotation angle of the first transmission member.

When a user rotates the steering wheel to change a traveling direction of a vehicle, the steering wheel drives the first transmission member connected to the steering wheel to rotate, and drives the second transmission member in a transmission connection to the first transmission member to move. The positioning portion is disposed on the second transmission member. When the positioning portion moves with the second transmission member and is blocked by the limiting member, continued movement of the second transmission member can be limited, that is, a movement range of the second transmission member is limited, so that a rotation angle of the first transmission member is limited, to finally limit a rotation angle range of the steering wheel. In this application, because the limiting member is movably disposed on one side of the second transmission member, that is, a relative distance between the positioning portion of the second transmission member and the limiting member is adjustable, when the positioning portion is at an initial position and does not move, and the limiting member is moved so that a distance between the limiting member and the positioning portion is reduced, a movement range of the second transmission member is reduced, and rotation angle ranges of the first transmission member and the steering wheel are reduced. Similarly, when the positioning portion is at the initial position and does not move, and the limiting member is moved so that a distance between the limiting member and the positioning portion is increased, a movement range of the second transmission member is increased, and rotation angle ranges of the first transmission member and the steering wheel are increased. The initial position is a position of the positioning portion corresponding to a case in which the steering wheel is in a non-steering state. The steering wheel in this application can drive the first transmission member to rotate clockwise or counter-clockwise, and the limiting member can block the positioning portion of the second transmission member, to limit a maximum clockwise rotation angle and a maximum counter-clockwise rotation angle of the first transmission member. Therefore, the steering wheel limiting apparatus in this application is adjustable, and can adjust a maximum rotation angle of the steering wheel, and can be used in and installed in different vehicle models, to meet maximum rotation angle requirements of steering wheels of the different vehicle models. The steering wheel limiting apparatus is universal, and there is no need to separately manufacture steering wheel limiting apparatuses with specific rotation angles for the different vehicle models. This can reduce manufacturing costs and improve production efficiency.

In a possible design, the steering wheel limiting apparatus further includes an apparatus bracket and a threaded lead screw. The threaded lead screw is rotatably connected to the apparatus bracket, the threaded lead screw is threadedly connected to the limiting member, and the limiting member is slidably connected to the apparatus bracket.

Rotation movement of the threaded lead screw may be converted into linear movement of the limiting member relative to the apparatus bracket through the threaded connection between the threaded lead screw and the limiting member and the slidable connection between the limiting member and the apparatus bracket, so that a distance between the limiting member and the positioning portion is changed, to adjust a movement range (for example, a rotation angle range) of the positioning portion and further adjust rotation angle ranges of the first transmission member and the steering wheel. In addition, the threaded connection between the threaded lead screw and the limiting member has a self-locking nature. Regardless of a driving force of the steering wheel, it is difficult to make, through transmission of the first transmission member and the second transmission member, the positioning portion push the limiting member to perform linear movement relative to the apparatus bracket. Therefore, the steering wheel limiting apparatus in this application has relatively high limiting reliability.

In a possible design, the apparatus bracket is provided with two sliding slots that are disposed opposite to each other, and two ends of the limiting member are respectively slidably connected to the sliding slots. This structure is simple, and is easy to manufacture and assemble.

In a possible design, the apparatus bracket includes a box, the sliding slot is provided on a side wall of the box, the box is provided with a notch, and the notch communicates with the sliding slot, so that the limiting member is installed in the sliding slot through the notch.

The apparatus bracket includes the box, and the sliding slot is provided on the side wall of the box. The limiting member needs to pass through the notch before being installed inside the box and performing slidable movement with the sliding slot located on the side wall. The box can protect the limiting member and the sliding slot from being polluted by an external foreign object. This ensures reliability of a slidable connection between the limiting member and the sliding slot.

In a possible design, the notch is a wedge-shaped notch, the apparatus bracket further includes a wedge-shaped block, and the wedge-shaped block fits with the wedge-shaped notch.

The wedge-shaped block fits with the wedge-shaped notch. In this way, on one hand, the limiting member is prevented from being detached from the box through the notch from the sliding slot. On the other side, because the wedge-shaped notch is located on the side wall of the box, the wedge-shaped block can be clamped into the wedge-shaped notch, so that the wedge-shaped block is prevented from being detached from the side wall.

In a possible design, an outer wall of the box is provided with a recess, the recess is provided with a counterbore round hole that penetrates through the side wall of the box, a flange is disposed at one end of the threaded lead screw, and the flange is rotatably disposed in the counterbore round hole. The apparatus bracket further includes a fastening plate, the fastening plate is detachably connected to the recess, and two ends of the flange along an axial direction of the threaded lead screw are in contact with and limit a step of the counterbore round hole and the fastening plate respectively.

The threaded lead screw rotatably cooperates with the counterbore round hole of the box through the flange, so that the threaded lead screw can rotate relative to the box. Along the axial direction of the threaded lead screw, one end of the flange abuts against the step of the counterbore round hole, and the other end of the flange abuts against the fastening plate installed on the box, to limit movement of the threaded lead screw along the axial direction of the threaded lead screw relative to the box.

In a possible design, the fastening plate is provided with a through hole, a protruding portion protruding from the flange is formed at an end part of the threaded lead screw, the protruding portion penetrates through the through hole, and the protruding portion is provided with a groove.

The through hole is configured to be passed through by the protruding portion of the flange located on the threaded lead screw, so that the groove located on the protruding portion communicates with an external environment of the box, and the user can use, outside the box, a tool to cooperate with the groove, and use the tool to drive the threaded lead screw to rotate, to drive the limiting member to slide relative to the box.

In a possible design, the steering wheel limiting apparatus further includes a first motor, and an output end of the first motor is connected to the threaded lead screw, and is configured to control rotation of the threaded lead screw. The driving manner is highly efficient and has high rotation precision, and facilitates the user to directly control, outside the vehicle, rotation of the threaded lead screw, so that a maximum rotation angle of the steering wheel is adjusted.

In a possible design, the steering wheel limiting apparatus further includes a second motor, and one end of the first transmission member passes through the box and is connected to an output shaft of the second motor.

The second motor is a road feel motor, and is configured to provide a return torque for the first transmission member and the steering wheel, so that the user can sense information such as a vehicle motion status and a road surface status by using the steering wheel.

In a possible design, a first boss is disposed on the first transmission member, the box is provided with a first via hole, the first boss rotatably penetrates through the first via hole, and the first transmission member is connected to the output shaft of the second motor through the first boss.

The first boss rotatably penetrates through the first via hole. In this way, on one hand, the first transmission member can rotate along a fixed axis relative to the box. On the other hand, the first boss is configured to connect, outside the box, to the output shaft of the second motor, so that a transmission connection part (for example, a gear meshing part) of the first transmission member and the second transmission member is located inside the box. This can reduce a risk of being polluted by an external foreign object.

In a possible design, the first boss is provided with a first keyway, a key is disposed on the output shaft of the second motor, and the first boss is fastened to the output shaft of the second motor through fitting between the first keyway and the key, so that the second motor provides the return torque for the first transmission member in a key connection manner. The connection manner is simple, and is easy to manufacture and assemble.

In a possible design, the apparatus bracket further includes a box cover, the box cover is fastened to the box, the box cover is provided with a window along a motion track of the positioning portion, an angle scale is disposed along an edge of the window, and the angle scale is configured to identify a rotation angle range of the first transmission member or the second transmission member.

The user may see the motion track of the positioning portion through the window on the box cover. When the positioning portion is blocked by the limiting member, the angle scale along the edge of the window facilitates the user to learn an angle scale value corresponding to a position of the positioning portion, to learn a specific value of a maximum rotation angle of the first transmission member or the second transmission member, so that a position of the limiting member relative to the second transmission member can be accurately adjusted, to meet maximum rotation angle limit requirements of steering wheels of different vehicle models.

In a possible design, both the first transmission member and the second transmission member are gears, and a diameter of the first transmission member is less than a diameter of the second transmission member, to form a gear reduction mechanism. The reduction mechanism has high transmission efficiency and is easy to maintain.

In a possible design, a transmission ratio of the first transmission member to the second transmission member is 1:6. In other words, when the first transmission member rotates for six circles, the second rotation member can rotate for one circle. It may be understood that, for different vehicles such as passenger vehicles and commercial vehicles, a maximum quantity of rotation circles of a steering wheel along a same direction may be three circles, two circles, two and a half circles, two and a half circles plus a quarter circle, or the like, to adapt to different types of vehicle models. When the limiting member in this application can abut against the positioning portion, the first transmission member can rotate for up to three circles along a same direction, and the second transmission member can drive the positioning portion to rotate for up to half a circle. In addition, when a transmission ratio is 1:6, a maximum rotation angle of the second transmission member may be less than 360°, to facilitate adjustment of a rotation angle of the first transmission member through adjustment of a position of the limiting member.

A second aspect of this application further provides a steering wheel, where the steering wheel includes the steering wheel limiting apparatus provided in the first aspect of this application, and has effect of the foregoing content.

A third aspect of this application further provides a vehicle, where the vehicle includes the steering wheel limiting apparatus provided in the first aspect of this application, and has effect of the foregoing content.

It should be understood that the foregoing general description and the following detailed description are merely used as examples, and are not intended to limit this application.

### BRIEF DESCRIPTION OF DRAWINGS

FIG. 1 is a diagram of a structure of a steering wheel limiting apparatus according to a specific embodiment of this application, where a box cover is not shown;
FIG. 2 is a top view of the steering wheel limiting apparatus in FIG. 1, where a positioning portion is at an initial position;
FIG. 3 is a top view of the steering wheel limiting apparatus in FIG. 1, where a positioning portion abuts against a limiting member;
FIG. 4 is an exploded diagram of a structure of the steering wheel limiting apparatus in FIG. 1 at a first angle of view;
FIG. 5 is an exploded diagram of structures of a sliding slot, a limiting member, a wedge-shaped notch, and a wedge-shaped block in FIG. 4;
FIG. 6 is an exploded diagram of a structure of the steering wheel limiting apparatus in FIG. 1 at a second angle of view;
FIG. 7 is a diagram of a structure of a box cover in FIG. 4;
FIG. 8 is an exploded diagram of a structure of the steering wheel limiting apparatus in FIG. 1 at a third angle of view, where a threaded lead screw, a first transmission member, and a wedge-shaped block are not shown;
FIG. 9 is an exploded diagram of structures of a fastening plate, a threaded lead screw, and a box in FIG. 1;
FIG. 10 is a diagram of a structure of a first transmission member in FIG. 1 at an angle of view 1;
FIG. 11 is a diagram of a structure of a first transmission member in FIG. 1 at an angle of view 2;
FIG. 12 is a diagram of a structure of a first transmission member in FIG. 1 at an angle of view 3; and
FIG. 13 is a diagram of a structure of a first transmission member in FIG. 1 at an angle of view 4.

### Reference numerals:

1: first transmission member; 11: first boss; 111: first keyway; 12: second boss; 121: second keyway; 2: second transmission member; 21: positioning portion; 22: central hole; 3: limiting member; 31: threaded hole; 4: apparatus bracket; 41: sliding slot; 42: box; 421: side wall; 422: notch; 423: wedge-shaped block; 424: outer wall; 425: recess; 426: counterbore round hole; 427: first via hole; 428: stationary shaft; 43: fastening plate; 431: through hole; 44: box cover; 441: window; 442: angle scale; 443: second via hole; 45: limiting disc; 46: first screw; 47: second screw; 48: third screw; 5: threaded lead screw; 51: flange; 52: protruding portion; 521: groove; 6: second motor.

The accompanying drawings herein are incorporated into this specification and constitute a part of this specification, show embodiments conforming to this application, and are used together with this specification to explain a principle of this application.

### DESCRIPTION OF EMBODIMENTS

To better understand technical solutions of this application, the following describes embodiments of this application in detail with reference to the accompanying drawings.

In the description of this application, unless otherwise explicitly specified or defined, the terms "first" and "second" are merely used for a purpose of description, and shall not be understood as an indication or implication of relative importance. Unless otherwise specified or explained, the term "a plurality of" refers to two or more. The terms "connection", "fixed", and the like should be understood in a broad sense. For example, the "connection" may be a fixed connection, or may be a detachable connection, an integrated connection, or an electrical connection; or the "connection" may be a direct connection, or an indirect connection through an intermediate medium. A person of ordinary skill in the art may understand specific meanings of the foregoing terms in this application based on specific situations.

This application provides a steering wheel limiting apparatus, a steering wheel, and a vehicle, and relates to the field of vehicle technologies. The steering wheel limiting apparatus in this application may be specifically used in a steer-by-wire steering wheel, and may be used in a vehicle (not shown in the figure) to limit a maximum rotation angle of a steering wheel. Certainly, the steering wheel limiting apparatus may also be used in a scenario such as a driving simulation simulator, a toy vehicle, or a steering apparatus. In content of subsequent embodiments, the steering wheel limiting apparatus in this application is mainly described by using an example in which the steering wheel limiting apparatus is used in a vehicle.

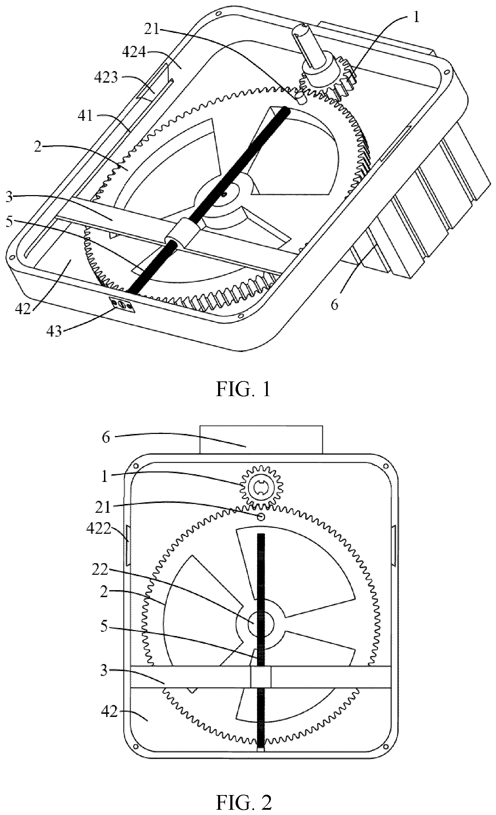

Refer to FIG. 1 to FIG. 4. The steering wheel limiting apparatus in this application includes a first transmission member 1, a second transmission member 2, and a limiting member 3. The first transmission member 1 is configured to connect to a steering wheel (not shown in the figure), and the second transmission member 2 is in a transmission connection to the first transmission member 1. The steering wheel controls the first transmission member 1 to drive the second transmission member 2 to move. A positioning portion 21 is disposed on the second transmission member 2. The limiting member 3 is movably disposed on one side of the second transmission member 2, and the limiting member 3 blocks the positioning portion 21, to limit a rotation angle of the first transmission member 1.

In this embodiment, when a user rotates the steering wheel to change a traveling direction of a vehicle, the steering wheel drives the first transmission member 1 connected to the steering wheel to rotate, and drives the second transmission member 2 in a transmission connection to the first transmission member 1 to move. The positioning portion 21 is disposed on the second transmission member 2. When the positioning portion 21 moves with the second transmission member 2 and is blocked by the limiting member 3, continued movement of the second transmission member 2 can be limited, that is, a movement range of the second transmission member 2 is limited, so that a rotation angle of the first transmission member 1 is limited, to finally limit a rotation angle range of the steering wheel. In this application, because the limiting member 3 is movably disposed on one side of the second transmission member 2, that is, a relative distance between the positioning portion 21 of the second transmission member 2 and the limiting member 3 is adjustable, when the positioning portion 21 is at an initial position and does not move, and the limiting member 3 is moved so that a distance between the limiting member 3 and the positioning portion 21 is reduced, a movement range of the second transmission member 2 is reduced, and rotation angle ranges of the first transmission member 1 and the steering wheel are reduced. Similarly, when the positioning portion 21 is at the initial position and does not move, and the limiting member 3 is moved so that a distance between the limiting member 3 and the positioning portion 21 is increased, a movement range of the second transmission member 2 is increased, and rotation angle ranges of the first transmission member 1 and the steering wheel are increased. The initial position is a position of the positioning portion corresponding to a case in which the steering wheel is in a non-steering state, as shown in FIG. 2. The steering wheel in this application can drive the first transmission member 1 to rotate clockwise or counter-clockwise, and the limiting member 3 can block the positioning portion 21 of the second transmission member 2, to limit a maximum clockwise rotation angle and a maximum counter-clockwise rotation angle of the first transmission member 1. Therefore, the steering wheel limiting apparatus in this application is adjustable, and can adjust a maximum rotation angle of the steering wheel, and can be used in and installed in different vehicle models, to meet maximum rotation angle requirements of steering wheels of the different vehicle models. The steering wheel limiting apparatus is universal, and there is no need to separately manufacture steering wheel limiting apparatuses with specific rotation angles for the different vehicle models. This can reduce manufacturing costs and improve production efficiency.

The first transmission member 1 is in a transmission connection to the second transmission member 2 to form a reduction mechanism, so that the steering wheel can drive the first transmission member 1 to rotate at least 360 degrees. In this way, a movement range of the positioning portion 21 located on the second transmission member 2 relative to the first transmission member 1 is relatively small. In other words, a limiting structure formed by the limiting member 3 and the positioning portion 21 occupies relatively small space inside the steering wheel limiting apparatus in this application. The reduction mechanism may be a gear reduction mechanism, a worm gear reduction mechanism, a lead screw reduction mechanism, or the like. The first transmission member 1 may be a gear with a small diameter, a worm wheel, or a lead screw. Correspondingly, the second transmission member 2 may be a gear with a large diameter, a worm, or a moving block threadedly connected to the lead screw. The positioning portion 21 may be disposed on the gear with a large diameter, the worm, or the moving block. In this way, the limiting member 3 can limit a rotation angle of the gear with a large diameter, a rotation angle of the worm, or a moving distance of the moving block, to limit a rotation angle of the gear with a small diameter, a rotation angle of the worm wheel, or a rotation angle of the lead screw, to finally limit a maximum rotation angle of the steering wheel.

Specifically, refer to FIG. 1 to FIG. 4. Both the first transmission member 1 and the second transmission member 2 in this application may be gears, and a diameter of the first transmission member 1 is less than a diameter of the second transmission member 2, to form a gear reduction mechanism. The reduction mechanism has high transmission efficiency and is easy to maintain.

Subsequent content of the first transmission member 1 and the second transmission member 2 in this specification is described by using the gear reduction mechanism as an embodiment.

More specifically, refer to FIG. 1 to FIG. 4. A transmission ratio of the first transmission member 1 to the second transmission member 2 may be 1:6. In other words, when the first transmission member 1 rotates for six circles, the second transmission member 2 can rotate for one circle. It may be understood that, for different vehicles such as passenger vehicles and commercial vehicles, a maximum quantity of rotation circles of a steering wheel along a same direction may be three circles, two circles, two and a half circles, two and a half circles plus a quarter circle, or the like, to adapt to different types of vehicle models. In this embodiment, when the limiting member 3 can abut against the positioning portion 21, the first transmission member 1 can rotate for up to three circles along a same direction, and the second transmission member 2 can drive the positioning portion 21 to rotate for up to half a circle. In addition, when a transmission ratio is 1:6, a maximum rotation angle of the second transmission member 2 may be less than 360°, to facilitate adjustment of a rotation angle of the first transmission member 1 through adjustment of a position of the limiting member 3.

Certainly, the transmission ratio of the first transmission member 1 to the second transmission member 2 may alternatively be 1:2, 1:3, 1:4, 1:5, or another reduction ratio.

Refer to FIG. 1 to FIG. 4. The steering wheel limiting apparatus in this application further includes an apparatus bracket 4 and a threaded lead screw 5. The threaded lead screw 5 is rotatably connected to the apparatus bracket 4, the threaded lead screw 5 is threadedly connected to the limiting member 3, and the limiting member 3 is slidably connected to the apparatus bracket 4.

In this embodiment, rotation movement of the threaded lead screw 5 may be converted into linear movement of the limiting member 3 relative to the apparatus bracket 4 through the threaded connection between the threaded lead screw 5 and the limiting member 3 and the slidable connection between the limiting member 3 and the apparatus bracket 4, so that a distance between the limiting member 3 and the positioning portion 21 is changed, to adjust a movement range (for example, a rotation angle range) of the positioning portion 21 and further adjust rotation angle ranges of the first transmission member 1 and the steering wheel. In addition, the threaded connection between the threaded lead screw 5 and the limiting member 3 has a self-locking nature. Regardless of a driving force of the steering wheel, it is difficult to make, through transmission of the first transmission member 1 and the second transmission member 2, the positioning portion 21 push the limiting member 3 to perform linear movement relative to the apparatus bracket 4. Therefore, the steering wheel limiting apparatus in this application has relatively high limiting reliability.

Because the limiting member 3 performs linear movement relative to the apparatus bracket 4, when both the first transmission member 1 and the second transmission member 2 are gears, a clockwise rotation angle range in which the second transmission member 2 drives the positioning portion 21 is the same as a counter-clockwise rotation angle range in which the second transmission member 2 drives the positioning portion 21, so that clockwise rotation angle ranges and counter-clockwise rotation angle ranges of the first transmission member 1 and the steering wheel are the same.

Specifically, refer to FIG. 1, FIG. 4, FIG. 5, and FIG. 6. The apparatus bracket 4 is provided with two sliding slots 41 that are disposed opposite to each other, and two ends of the limiting member 3 are respectively slidably connected to the sliding slots 41. This structure is simple, and is easy to manufacture and assemble.

The middle of the limiting member 3 is provided with a threaded hole 31, and the threaded hole 31 is configured for a threaded connection to the threaded lead screw 5, so that magnitudes of interaction forces between the two ends of the limiting member 3 and the two sliding slots 41 that are disposed opposite to each other are the same. This improves a service life of the limiting member 3.

More specifically, refer to FIG. 1, FIG. 4, FIG. 5, and FIG. 6. The apparatus bracket 4 includes a box 42, the sliding slot 41 is provided on a side wall 421 of the box 42, the box 42 is provided with a notch 422, and the notch 422 communicates with the sliding slot 41, so that the limiting member 3 is installed in the sliding slot 41 through the notch 422.

In this embodiment, the apparatus bracket 4 includes the box 42, and the sliding slot 41 is provided on the side wall 421 of the box 42. The limiting member 3 needs to pass through the notch 422 before being installed inside the box 42 and performing slidable movement with the sliding slot 41 located on the side wall 421. The box 42 can protect the limiting member 3 and the sliding slot 41 from being polluted by an external foreign object. This ensures reliability of a slidable connection between the limiting member 3 and the sliding slot 41.

Refer to FIG. 1, FIG. 4, FIG. 5, and FIG. 6. The notch 422 may be a wedge-shaped notch, the apparatus bracket 4 further includes a wedge-shaped block 423, and the wedge-shaped block 423 fits with the wedge-shaped notch.

In this embodiment, the wedge-shaped block 423 fits with the wedge-shaped notch. In this way, on one hand, the limiting member 3 is prevented from being detached from the box 42 through the notch 422 from the sliding slot 41. On the other side, because the wedge-shaped notch is located on the side wall 421 of the box 42, the wedge-shaped block 423 can be clamped into the wedge-shaped notch, so that the wedge-shaped block 423 is prevented from being detached from the side wall 421.

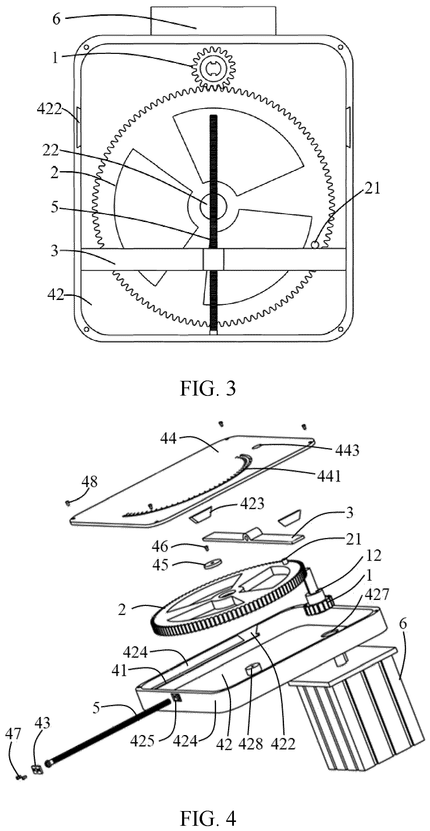

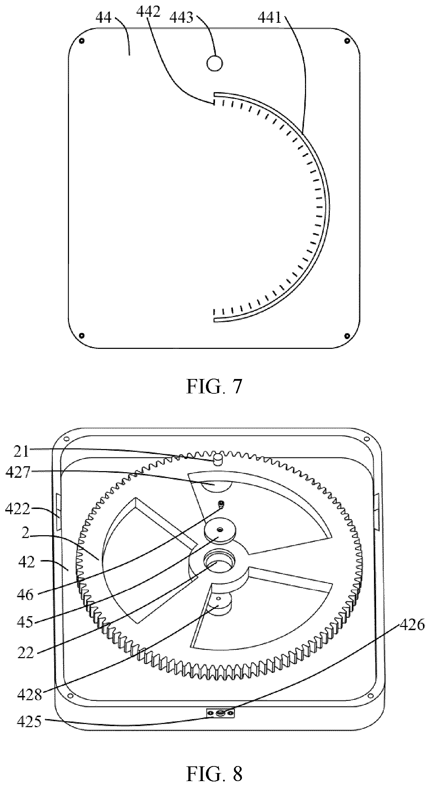

Refer to FIG. 4 and FIG. 7. The apparatus bracket 4 may further include a box cover 44. The box cover 44 is fastened to the box 42. The box cover 44 is provided with a window 441 along a motion track of the positioning portion 21. An angle scale 442 is disposed along an edge of the window 441. The angle scale 442 is configured to identify a rotation angle range of the first transmission member 1 or the second transmission member 2.

In this embodiment, the user may see the motion track of the positioning portion 21 through the window 441 on the box cover 44. When the positioning portion 21 is blocked by the limiting member 3, the angle scale 442 along the edge of the window 441 facilitates the user to learn an angle scale value corresponding to a position of the positioning portion 21, to learn a specific value of a maximum rotation angle of the first transmission member 1 or the second transmission member 2, so that a position of the limiting member 3 relative to the second transmission member 2 can be accurately adjusted, to meet maximum rotation angle limit requirements of steering wheels of different vehicle models.

In this embodiment, an angle scale value of the angle scale 442 corresponds to a rotation angle of the first transmission member 1, so that the user can directly learn a value of a maximum rotation angle of the steering wheel.

In addition, as shown in FIG. 4, a third screw 48 penetrates through the box cover 44 and is threadedly connected to the box 42. When the box cover 44 is fastened to the box 42, the box cover 44 can restrict the wedge-shaped block 423 from being detached from the wedge-shaped notch located on the side wall 421.

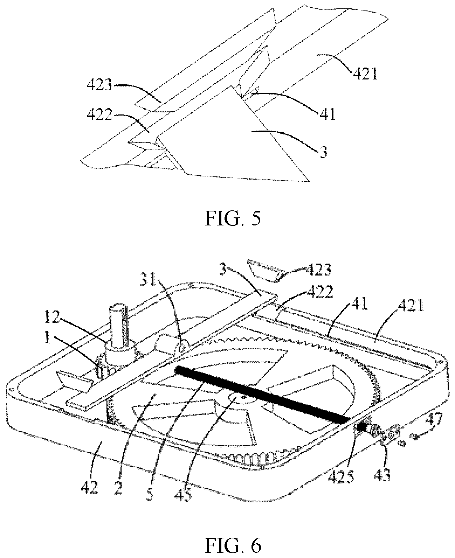

Refer to FIG. 6 to FIG. 9. An outer wall 424 of the box 42 is provided with a recess 425, the recess 425 is provided with a counterbore round hole 426 that penetrates through the side wall 421 of the box 42, a flange 51 is disposed at one end of the threaded lead screw 5, and the flange 51 is rotatably disposed in the counterbore round hole 426. The apparatus bracket 4 further includes a fastening plate 43, the fastening plate 43 is detachably connected to the recess 425, and two ends of the flange 51 along an axial direction of the threaded lead screw 5 are in contact with and limit a step of the counterbore round hole 426 and the fastening plate 43 respectively.

In this embodiment, the threaded lead screw 5 rotatably cooperates with the counterbore round hole 426 of the box 42 through the flange 51, so that the threaded lead screw 5 can rotate relative to the box 42. Along the axial direction of the threaded lead screw 5, one end of the flange 51 abuts against the step of the counterbore round hole 426, and the other end of the flange 51 abuts against the fastening plate 43 installed on the box 42, to limit movement of the threaded lead screw 5 along the axial direction of the threaded lead screw 5 relative to the box 42.

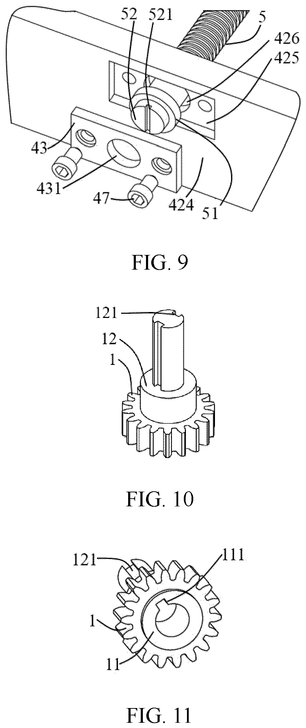

Refer to FIG. 9. A second screw 47 can penetrate through the fastening plate 43 and is fastened to the recess 425.

Refer to FIG. 9. The fastening plate 43 is provided with a through hole 431, a protruding portion 52 protruding from the flange 51 is formed at an end part of the threaded lead screw 5, the protruding portion 52 penetrates through the through hole 431, and the protruding portion 52 is provided with a groove 521.

In this embodiment, the through hole 431 is configured to be passed through by the protruding portion 52 of the flange 51 located on the threaded lead screw 5, so that the groove 521 located on the protruding portion 52 communicates with an external environment of the box 42, and the user can use, outside the box 42, a tool to cooperate with the groove 521, and use the tool to drive the threaded lead screw 5 to rotate, to drive the limiting member 3 to slide relative to the box 42.

The groove 521 is a groove of a "linear shape". Certainly, the groove 521 may alternatively be a groove of a "cross shape" or a groove of another shape.

In addition, the user may manually or electrically drive the threaded lead screw 5 to rotate.

Specifically, the steering wheel limiting apparatus in this application further includes a first motor (not shown in the figure). An output end of the first motor (not shown in the figure) is connected to the threaded lead screw 5, and is configured to control rotation of the threaded lead screw 5. The driving manner is highly efficient and has high rotation precision, and facilitates the user to directly control, outside the vehicle, rotation of the threaded lead screw, so that a maximum rotation angle of the steering wheel is adjusted.

Refer to FIG. 1 and FIG. 4. The steering wheel limiting apparatus further includes a second motor 6, and one end of the first transmission member 1 passes through the box 42 and is connected to an output shaft (not shown in the figure) of the second motor 6.

In this embodiment, the second motor 6 is a road feel motor, and is configured to provide a return torque for the first transmission member 1 and the steering wheel, so that the user can sense information such as a vehicle motion status and a road surface status by using the steering wheel.

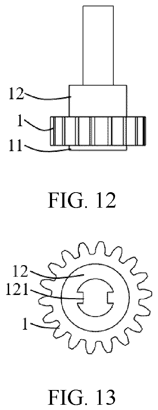

Refer to FIG. 4, FIG. 8, and FIG. 10 to FIG. 13. A first boss 11 is disposed on the first transmission member 1, the box 42 is provided with a first via hole 427, the first boss 11 rotatably penetrates through the first via hole 427, and the first transmission member 1 is connected to the output shaft 61 of the second motor 6 through the first boss 11.

In this embodiment, the first boss 11 rotatably penetrates through the first via hole 427. In this way, on one hand, the first transmission member 1 can rotate along a fixed axis relative to the box 42. On the other hand, the first boss 11 is configured to connect, outside the box 42, to the output shaft 61 of the second motor 6, so that a transmission connection part (for example, a gear meshing part) of the first transmission member 1 and the second transmission member 2 is located inside the box 42. This can reduce a risk of being polluted by an external foreign object.

A second boss 12 is further disposed on the first transmission member 1, the box cover 44 is provided with a second via hole 443, and the second boss 12 rotatably penetrates through the second via hole 443, and is configured to connect to the steering wheel.

In the foregoing embodiment, the first boss 11 and the second boss 12 of the first transmission member 1 respectively abut against the box 42 and the box cover 44, to limit movement of the first transmission member 1 along an axial direction of the first transmission member 1 relative to the box 42.

Refer to FIG. 10 to FIG. 13. The first boss 11 is provided with a first keyway 111, a key (not shown in the figure) is disposed on the output shaft of the second motor 6, and the first boss 11 is fastened to the output shaft of the second motor 6 through fitting between the first keyway 111 and the key, so that the second motor 6 provides the return torque for the first transmission member 1 in a key connection manner. The connection manner is simple, and is easy to manufacture and assemble.

Correspondingly, the second boss 12 is provided with a second keyway 121, and is configured to form a key connection with the steering wheel, so that the first transmission member 1 transfers the return torque to the steering wheel.

In the foregoing embodiment, refer to FIG. 8. A stationary shaft 428 is disposed in the box 42 to rotatably cooperate with the central hole 22 of the second transmission member 2. A limiting disc 45 is further disposed in the box 42. The limiting disc 45 abuts against one end that is of the second transmission member 2 and that faces away from the box 42, and the first screw 46 penetrates through the limiting disc 45 and is threadedly connected to and fits with the stationary shaft 428, to limit axial movement of the second transmission member 2 relative to the stationary shaft 428.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A steering wheel limiting apparatus, wherein the steering wheel limiting apparatus comprises:
a first transmission member, configured to connect to a steering wheel;
a second transmission member in a transmission connection to the first transmission member, wherein the steering wheel controls the first transmission member to drive the second transmission member to move, and a positioning portion is disposed on the second transmission member; and
a limiting member, movably disposed on one side of the second transmission member, wherein the limiting member blocks the positioning portion, to limit a rotation angle of the first transmission member.

2. The steering wheel limiting apparatus according to claim 1, further comprising an apparatus bracket and a threaded lead screw, wherein the threaded lead screw is rotatably connected to the apparatus bracket, the threaded lead screw is threadedly connected to the limiting member, and the limiting member is slidably connected to the apparatus bracket.

3. The steering wheel limiting apparatus according to claim 2, wherein the apparatus bracket is provided with two sliding slots that are disposed opposite to each other, and two ends of the limiting member are respectively slidably connected to the sliding slots.

4. The steering wheel limiting apparatus according to claim 3, wherein the apparatus bracket comprises a box, and the sliding slot is provided on a side wall of the box; and
the box is provided with a notch, and the notch communicates with the sliding slot, so that the limiting member is installed in the sliding slot through the notch.

5. The steering wheel limiting apparatus according to claim 4, wherein the notch is a wedge-shaped notch, the apparatus bracket further comprises a wedge-shaped block, and the wedge-shaped block fits the wedge-shaped notch.

6. The steering wheel limiting apparatus according to claim 4, wherein an outer wall of the box is provided with a recess, the recess is provided with a counterbore round hole that penetrates through the side wall of the box, a flange is disposed at one end of the threaded lead screw, and the flange is rotatably disposed in the counterbore round hole; and
the apparatus bracket further comprises a fastening plate, the fastening plate is detachably connected to the recess, and two ends of the flange along an axial direction of the threaded lead screw are in contact with and limit a step of the counterbore round hole and the fastening plate respectively.

7. The steering wheel limiting apparatus according to claim 6, wherein the fastening plate is provided with a through hole, a protruding portion protruding from the flange is formed at an end part of the threaded lead screw, the protruding portion penetrates through the through hole, and the protruding portion is provided with a groove.

8. The steering wheel limiting apparatus according to claim 2, further comprising a first motor, wherein an output end of the first motor is connected to the threaded lead screw, and is configured to control rotation of the threaded lead screw.

9. The steering wheel limiting apparatus according to claim 4, further comprising a second motor, wherein one end of the first transmission member passes through the box and is connected to an output shaft of the second motor.

10. The steering wheel limiting apparatus according to claim 9, wherein a first boss is disposed on the first transmission member, the box is provided with a first via hole, the first boss rotatably penetrates through the first via hole, and the first transmission member is connected to the output shaft of the second motor through the first boss.

11. The steering wheel limiting apparatus according to claim 10, wherein the first boss is provided with a first keyway, a key is disposed on the output shaft of the second motor, and the first boss is fastened to the output shaft of the second motor through fitting between the first keyway and the key.

12. The steering wheel limiting apparatus according to any one of claims 4 to 11, wherein the apparatus bracket further comprises a box cover, the box cover is fastened to the box, the box cover is provided with a window along a motion track of the positioning portion, an angle scale is disposed along an edge of the window, and the angle scale is configured to identify a rotation angle range of the first transmission member or the second transmission member.

13. The steering wheel limiting apparatus according to any one of claims 1 to 12, wherein both the first transmission member and the second transmission member are gears, and a diameter of the first transmission member is less than a diameter of the second transmission member.

14. The steering wheel limiting apparatus according to claim 13, wherein a transmission ratio of the first transmission member to the second transmission member is 1:6.

15. A steering wheel, wherein the steering wheel comprises the steering wheel limiting apparatus according to any one of claims 1 to 14.

16. A vehicle, wherein the vehicle comprises the steering wheel limiting apparatus according to any one of claims 1 to 14.
